# EUROPÄISCHE PATENTSCHRIFT

(11) **EP 1 413 189 B1**
(45) Veröffentlichungstag und Bekanntmachung des Hinweises auf die Patenterteilung: **13.12.2006**
(21) Anmeldenummer: 03024180.6
(22) Anmeldetag: 21.10.2003
(51) Int. Cl.: A01D 34/00

(54) **Mäher mit Mulchfunktion**
Mower with mulching function
Tondeuse avec une fonction scarificateur

(30) Priorität: 26.10.2002 DE 10249971
(43) Veröffentlichungstag der Anmeldung: 28.04.2004
(73) Patentinhaber: Richter, Harald, 24629 Kisdorf (DE); Richter, Lutz, 22081 Hamburg (DE)
(72) Erfinder: Richter, Harald, 24629 Kisdorf (DE); Richter, Lutz, 22081 Hamburg (DE)
(74) Vertreter: Jaeschke, Rainer

(56) Entgegenhaltungen:
- WO-A-92/02123
- WO-A-99/65289
- DE-A- 19 612 997
- FR-A- 2 835 393
- GB-A- 637 832
- US-A- 3 057 140
- US-A- 3 706 189
- US-A- 5 363 636

## Beschreibung

Die Erfindung betrifft einen Mäher mit einem Messergehäuse, in dem ein Messer um eine aufrechte Rotationsachse in einer Drehebene rotiert, die in der Betriebslage im wesentlichen parallel zum Boden verläuft, so dass bei einer Bewegung des Mähers in Mährichtung das Schnittgut entsprechend dem Durchmesser des Messers geschnitten wird.

Mäher, insbesondere Rasenmäher, sind in unterschiedlichen Bauformen bekannt. Man unterscheidet insbesondere zwischen hand- oder motorgetriebenen Mähern und zwischen Spindelmähern und Sichelmähern. Der Spindelmäher umfasst eine um eine horizontale Achse umlaufende Spindel mit schraubenartig gewundenen Messern und eine gerade Gegenschneide in Bodennähe. Ein Sichelmäher weist ein propellerartiges Messer mit Schneidkanten auf, das um eine aufrechte Achse rotiert. Das Messer arbeitet hier ohne Gegenschneide, und das Gras wird nur aufgrund der hohen Umfangsgeschwindigkeit der Schneidkanten geschnitten.

Solche Sichelmäher weisen in der Regel ein relativ flaches Messergehäuse auf, das vorne und hinten von freilaufenden oder angetriebenen Rädern getragen wird. Auf dem Messergehäuse befindet sich der Motor, der das Messer antreibt. Häufig sind Sichelmäher mit Auffangeinrichtungen für das Schnittgut versehen. Das Messergehäuse einerseits und das umlaufende Messer andererseits sind aerodynamisch so ausgebildet, dass das geschnittene Schnittgut nach oben gezogen und durch eine Auswurföffnung in einen Auffangkorb geleitet wird.

Grundsätzlich ist eine Auffangeinrichtung dann wünschenswert, wenn der Rasen hinterher als Nutz- oder Spielfläche verwendet werden soll. Aus der US-A 3 057 140 ist es bekannt, einen Mäher mit einer hinteren Bodenplatte zu versehen, die zwischen Messer und Boden verläuft. Im Bereich der Bodenplatte schließt sich die Auswurföffnung an, so dass das frisch geschnitten Gras gut aufgefangen werden kann. Aus der US-A 3 706 189 ist ein Mäher bekannt, bei welchem die Spitzen des geraden Messers in einem Kanal verlaufen. Dadurch soll eine gute Sogwirkung entstehen. Die US-A 5,363,636 beschreibt einen Sichelmäher mit einem Messer, dessen äußeren Enden nach oben angewinkelt sind. Damit solle in Mehrfachschnitt des Rasens bewirkt werden. Die tiefer liegenden Schneidkanten erfassen jedoch einen geringen Radius, so dass insgesamt eine geringere Schnittbreite erzielt wird.

Insbesondere aus biologischen Gründen ist es wünschenswert, wenn zumindest ein Teil des geschnittenen Schnittgutes auf dem frisch geschnittenen Rasen verbleibt. Hierdurch werden ein Austrocknen und eine Mineralstoffverarmung des Bodens verhindert. Es ist daher bekannt, den geschnittenen Rasen nicht aufzufangen, sondern auf dem Boden liegen zu lassen. Das hat jedoch nur dann den gewünschten Erfolg, wenn das geschnittene Schnittgut zum einen gleichmäßig auf dem Boden verteilt wird. Zum anderen darf das Schnittgut eine bestimmte Länge nicht überschreiten, damit es zwischen den stehen gebliebenen Halmen auf den Boden gelangen kann und sich dort zersetzt.

Es sind sogenannte Mulchmäher bekannt, bei welchen das geschnittene Schnittgut durch Einbauten im Strömungskanal wieder in Richtung auf das Messer geleitet wird, so dass eine weitere Zerkleinerung des geschnittenen Gutes stattfinden kann. Derartige Einbauten erzielen jedoch nur teilweise die gewünschte Zerkleinerung des Schnittgutes. Auch ist hiermit eine erhöhte Geräuschentwicklung verbunden.

Der Erfindung liegt die Aufgabe zugrunde, einen Mäher der eingangs geschilderten Art so auszubilden, dass eine verbesserte Mulchfunktion erreicht wird. Insbesondere soll bewirkt werden, dass relativ klein geschnittenes Schnittgut erzeugt wird.

Die Aufgabe wird gemäß der Erfindung dadurch gelöst, dass der der in Mährichtung vordere Bereich des Messergehäuses zumindest teilweise durch eine Bodenplatte abgedeckt ist, die zwischen Messer und Boden verläuft sich von vorne bis etwa zur Mitte des Messergehäuses erstreckt, und dass das Messer in radialer Richtung wenigstens zwei Schneidkanten oder Schneidkantenbereiche mit unterschiedlichen Schnitthöhen aufweist. Insbesondere ist vorgesehen, dass die äußeren Schneidkanten eine geringere Schnitthöhe als die inneren Schneidkanten erzeugen. Bei dieser Ausführungsform wird das zu schneidende Gut ebenfalls erst hinter der Bodenplatte vom rotierenden Messer erfasst. Das zu schneidende Gut richtet sich in bekannter Weise aufgrund der Sogwirkung auf, wobei die in bezug auf die Schnittbreite inneren Halme zunächst von den inneren und anschließend erneut von den äußeren Schneidkanten mehrfach geschnitten werden. Es wird somit ein im Vergleich zu herkömmlichen Mähern mehr zerkleinertes Schnittgut erzeugt. Lediglich die Halme im äußeren Bereich der Schnittbreite werden unmittelbar auf die eingestellte Schnitthöhe geschnitten. Insgesamt ergibt sich jedoch ein gut zerkleinertes Schnittgut zur Verwendung als Mulch. Insbesondere wird jedoch erreicht, dass ein ebener Schnitt des Rasens erzeugt wird.

Es kann beispielsweise vorgesehen werden, dass wenigstens eine Schneidkante oder ein Schneidkantenbereich des Messers in radialer Richtung schräg nach unten und außen verlaufen. Die Neigung kann in der Betriebslage des Mähers 15° bis 45° zum Boden betragen. Gemäß einer anderen Ausführungsform ist es möglich, dass das Messer einen in radialer Richtung stufenweise ausgebildeten Verlauf aufweist derart, dass in bezug auf die Rotationsachse innere Schneidkanten oder Schneidkantenbereiche mit höherer und äußere Schneidkanten oder Schneidkantenbereiche mit niedrigerer Schnitthöhe vorhanden sind. Auch können ein abschnittsweise schräger Verlauf und ein abschnittsweise stufenweiser Verlauf miteinander kombiniert werden. Durch alle Maßnahmen wird erreicht, dass der innere Bereich einer Schneidbahn mehrfach bis auf die gewünschte Schnitthöhe geschnitten wird.

Bei einem Sichelmäher wird ein Grashalm nur aufgrund der hohen Umlaufgeschwindigkeit der Schneidkanten des Messers geschnitten. Es ist offensichtlich, dass die Umlaufgeschwindigkeit vom Radius abhängt. Um einen sauberen Schnitt über den gesamten Bereich der Schneidkanten zu erreichen, kann es zweckmäßig sein, wenn ein radial innerer Abschnitt des Messers keine Schneidkante aufweist und als Scheibe ausgebildet ist.

Weiterhin ist es zweckmäßig, wenn zumindest die radial äußeren Schneidkanten oder Schneidkantenbereiche in der Betriebslage im wesentlichen parallel zum Boden ausgerichtet sind. Hierdurch wird ein sauberer Endschnitt bewirkt.

Die Bodenplatte kann grundsätzlich beliebig ausgebildet sein. Es kann vorgesehen werden, dass die Bodenplatte im wesentlichen eben und in der Betriebslage im wesentlichen parallel zum Boden oder zur Drehebene des Messers verläuft. Es kann aber auch zweckmäßig sein, wenn die Bodenplatte an den radialen Verlauf des Messers angepasst ist. Dies hat den Vorteil, dass das zu schneidende Gut im mittleren Bereich nicht so stark niedergedrückt wird, so dass ein Aufrichten der Spitzen schneller möglich ist. Die Spitzen werden somit sicher vom inneren Bereich mit der höheren Schnitthöhe erfasst, so dass die erwünschte Zerkleinerung des Schnittgutes bewirkt wird.

Die Bodenplatte kann die Rotationsachse überdecken. Hierbei kann es günstig sein, wenn die Rotationsachse an der Bodenplatte gelagert ist. Damit wird ein besonders stabiler Aufbau des Mähers erreicht, da das Messer nicht mehr wie üblich fliegend gelagert ist.

Das geschnittene Schnittgut kann in dem geschnittenen und zerkleinerten Zustand auf dem Boden verbleiben. Es kann auch vorgesehen werden, dass das Schnittgut zunächst aufgefangen wird, um anschließend fein und gleichmäßig auf den geschnittenen Boden oder auf einer anderen Oberfläche verteilt zu werden. Dafür kann der Mäher mit einer Auswurföffnung ausgestattet sein, die mit einer entsprechenden Auffangeinrichtung zusammenwirkt. Bei einem solchen Mäher ist vorgesehen, dass die Bodenplatte in Rotationsrichtung die Auswurföffnung in der Projektion zumindest teilweise überdeckt oder sich über diese hinaus erstreckt. Dies hat den Vorteil, dass kein Gras im Bereich der Auswurföffnung geschnitten und unmittelbar abgezogen werden kann. Vielmehr wird das dort geschnittene Schneidgut wenigstens einmal mehr um die Rotationsachse im Messergehäuse transportiert, wodurch eine weitere Zerkleinerung bewirkt wird.

Alternativ kann vorgesehen werden, dass das Messer in Fahrtrichtung hinten offen ausgebildet ist. Dann wird das zerkleinerte Schnittgut hinten ausgeworfen.

Wie die Bodenplatte am Messergehäuse befestigt ist, ist grundsätzlich beliebig. Es ist zweckmäßig, wenn die Bodenplatte lösbar mit dem Messergehäuse verbunden ist. Dadurch ist es möglich, eine Reparatur des Messers oder beispielsweise einen Austausch des Messers leicht durchzuführen.

Der Mäher kann in üblicher Weise mit einer Schnitthöhenverstellung aufgerüstet sein. Das Messer kann beispielsweise durch einen Benzinmotor oder durch einen Elektromotor angetrieben werden. Auch können die Räder freilaufend sein oder angetrieben werden. Auch können an sich bekannte hinterherlaufende Walzeneinrichtungen für eine Bodenverdichtung oder zum Niederdrücken der Halme vorhanden sein.

Grundsätzlich kann für handgeschobene Mäher ein Messer mit zwei diametral gegenüberliegenden Schneidkanten ausreichend sein. Für eine schnellere Schnittfolge beispielsweise für Mähtraktoren können zwei oder drei Messer mit jeweils diametral gegenüberliegenden Schneidkanten um die gemeinsame Rotationsachse drehend vorgesehen werden.

Vorstehend wurde die Erfindung anhand eines einzelnen Messers beschrieben. Bei Mähern größerer Schnittbreite ist es teilweise erforderlich, mehrere Messer nebeneinander anzuordnen. Hier kann jedem Messer eine derartige Bodenplatte zugeordnet werden, so dass die gewünschte Zerkleinerung des Schnittgutes bewirkt wird.

Die Erfindung wird im folgenden anhand der schematischen Zeichnung näher erläutert. Es zeigen:
- Fig. 1: eine Seitenansicht eines Mähers gemäß der Erfindung, teilweise im Schnitt,

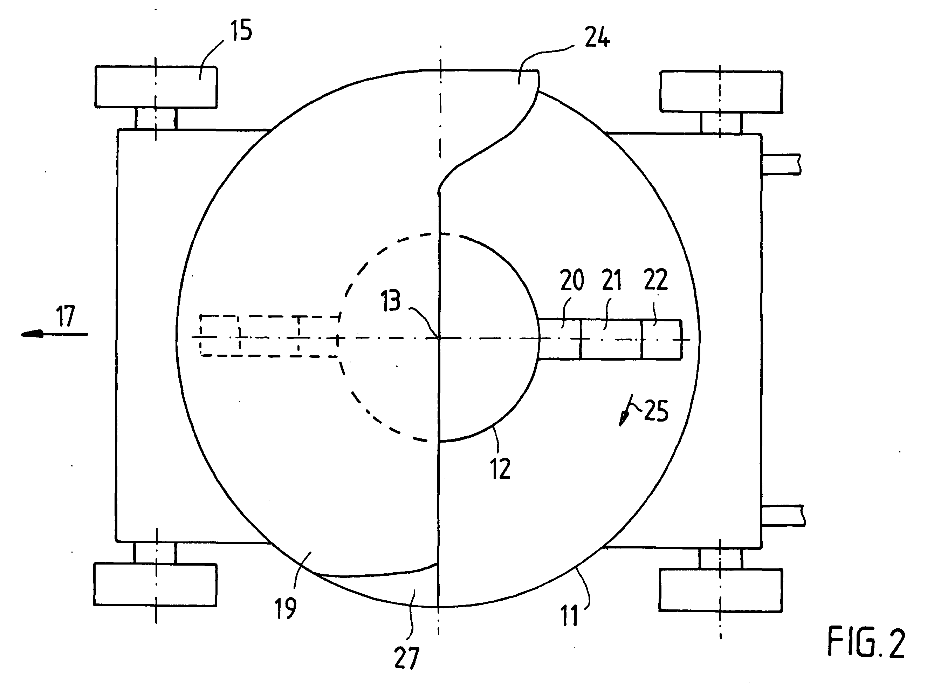

- Fig. 2: die Untersicht des Mähers gemäß Figur 1 und
- Fig. 3: die Untersicht auf ein Messer gemäß einer weitergehenden Ausführungsform der Erfindung und
- Fig. 4: einen Schnitt durch das Messer gemäß Fig. 3.

Der in der Zeichnung dargestellte Mäher weist ein nach unten offenes Messergehäuse 11 auf, in dem ein Messer 12 um eine aufrechte Achse 13 drehbar gelagert ist. Auf der dem Messer abgekehrten Seite des Messergehäuses ist ein Motor 14 zum Antreiben des Messers 12 angeordnet. Die Antriebswelle des Messers 12 erstreckt sich durch das Messergehäuse 11 hindurch bis zum Motor 14. Es können Rutschkupplungen und Sicherheitskupplungen sowie Bremsen vorhanden sein, um eine Beschädigung des Messers beim Auftreffen auf ein Hindernis zu vermeiden.

In dem Ausführungsbeispiel ist das Messer 12 im wesentlichen gerade ausgebildet und erstreckt sich über den gesamten Durchmesser des durch die Drehung gebildeten Schnittkreises. Damit wird ein zur Rotationsachse symmetrischer Aufbau erreicht. Für eine schnellere Schnittfolge kann vorgesehen werden, dass mehrere solcher gerader Messer symmetrisch zur Rotationsachse, beispielsweise zwei in einem 90°-Winkel oder drei in einem 60°-Winkel zueinander verdreht angeordnet sind.

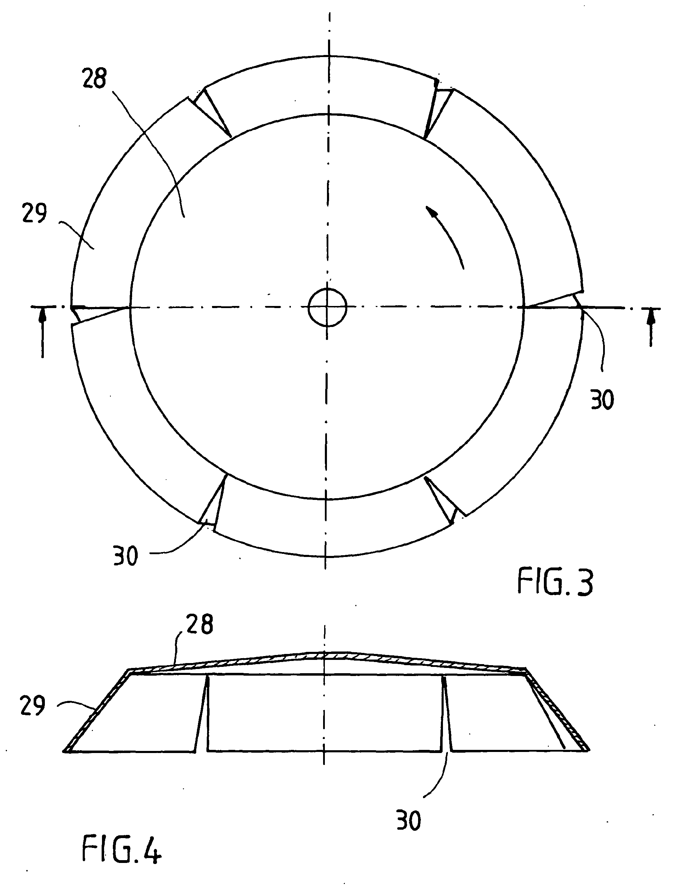

Es kann aber auch vorgesehen werden, dass, wie in den Fig. 3 und Fig. 4 gezeigt, das Messer als geschlossene, nach unten offene Glocke 28 mit einem radial äußeren Rand 29 ausgebildet ist, der nach unten und außen geneigt verläuft. Die Schneidkanten oder Schneidkantenbereiche werden durch nach innen gebogene Einschnitte 30 des Rands gebildet. Es können aber auch größere Aussparungen mit eingebogenen Schneidkanten oder Schneidkantenbereich in dem Rand vorhanden sein. Damit wird ein stabiler Aufbau des Messer erreicht. Es können wenigstens zwei und vorzugsweise vier bis zehn oder zwölf symmetrisch zur Rotationsachse angeordnete Schneidkanten oder Schneidkantenbereiche an dem Rand vorgesehen sein. Dann kann eine schnelle Schnittfolge für größere Vorschubgeschwindigkeiten erzielt werden. Der Rand kann in der Betriebslage in einem Winkel zwischen 45° und nahezu 90° geneigt zum Boden verlaufen. Der Rand kann dabei geradlinig oder auch gekrümmt ausgebildet sein. Die Schneidkanten können durch Einschnitte, die am der unteren Kante des Rand der Glocke beginnen, oder aber durch mittige im Rand angeordnete Einschnitte gebildet werden. Insgesamt wird eine gute Zerkleinerung bewirkt, da durch die Drehbewegung und den dadurch erzeugten Sog das Schnittgut durch die Schlitze zu den Schneidkante nach Außen geführt wird.

Das in den Fig. 3 und Fig. 4 gezeigte Messer kann grundsätzlich auch bei einem Mäher ohne Bodenplatte, also bei einem herkömmlichen Sichelmäher, eingesetzt werden. Dann entfällt die bevorzugte besondere Mulchfunktion.

Gleichwohl wird ein stabiles Messer mit schneller Schnittfolge bereitgestellt.

Weiterhin ist das Messergehäuse 11 vorne und hinten mit Laufrädern 15 versehen, die beispielsweise höhenverstellbar sein können. Dadurch befindet sich das Messer in einem gewissen Abstand zum Boden, wodurch die Schnitthöhe definiert wird. Eine höher liegendes Messer mit höherer Schneidkante bewirkt eine höhere Schnittkante, während eine tiefere Schneidkante einen kürzeren Schnitt erzeugt. Weiterhin ist das Messergehäuse 11 mit einem Handgriff 16 versehen, mit dem der Mäher geschoben und bedient werden kann. Insoweit entspricht der dargestellte Mäher einem herkömmlichen Sichelmäher und bedarf keiner weiteren Erläuterung.

Für den Einsatz als Mulchmäher ist vorgesehen, dass das Messergehäuse 11 in dem in Mährichtung 17 vorderen Bereich 18 mit einer Bodenplatte 19 versehen ist, die sich unterhalb des Messergehäuses 11 zwischen dem Messer 12 und dem Boden 23 erstreckt. Diese Bodenplatte 19 überdeckt in etwa die vordere Hälfte des im wesentlichen kreisrund ausgebildeten Messergehäuses 11.

Weiterhin weist das Messer in radialer Richtung Schneidkanten bzw. Schneidkantenbereiche 20, 21, 22 auf, die jeweils in unterschiedlichen Schnitthöhen angeordnet sind. Bei der in der Zeichnung dargestellten Ausführungsform sind die inneren Schneidkanten 20 und die äußeren Schneidkanten 22 horizontal ausgerichtet, während die dazwischen liegende Schneidkante 21 einen schräg nach unten und außen verlaufenden Bereich aufweist. Insbesondere liegt die äußere Schneidkante 22 tiefer als die innere Schneidkante 20 und bewirkt somit eine geringere Schnitthöhe.

Durch diese Anordnung der unterschiedlich hohen Schneidkanten 20, 21, 22 in Verbindung mit der den vorderen Schnittbereich abdeckenden Bodenplatte wird erreicht, dass das Gras erst hinter der Bodenplatte von dem Messer erfasst wird. Es wird somit vermieden, dass das Gras als erstes von dem radial äußeren und tiefsten Messerabschnitt erfasst wird. Vielmehr wird der mittlere Bereich der bearbeiteten Bahn zunächst von dem Messerabschnitt 20 mit einer höheren Schnitthöhe geschnitten. Im weiteren Verlauf der Bewegung wird dieser Bereich und der radial weiter außen liegende Bereich von dem schrägen Schneidkantenbereich 21 geschnitten. Erst dann erfolgt der abschließende Schnitt auf die gewünschte Schnitthöhe durch den radial äußeren Abschnitt 22 des Messers 12. Lediglich der äußere Randbereich der zu mähenden Bahn wird unmittelbar auf die gewünschte Schnitthöhe geschnitten.

Der Abstand der unterschiedlich hohen Schnittkanten oder Schnittkantenbereiche 20, 21, 22 kann 1 cm bis 15 cm und insbesondere 1 cm bis 10 cm. Bevorzugt wird ein Abstand zwischen 1 cm bis 5 cm. Insgesamt ergibt sich ein gut zerkleinertes Schnittgut, das sich als Mulch verwenden lässt.

Der schematisch dargestellte Rasenmäher weist zusätzlich eine Auswurföffnung 24 für das Schnittgut auf. Dies ist beispielsweise dann zweckmäßig, wenn das geschnittene und zerkleinerte Schnittgut nicht unmittelbar auf der geschnittenen Fläche verbleiben soll. Hier ist vorgesehen, dass die Bodenplatte 19, in der Projektion gesehen, die Auswurföffnung überdeckt. Dies hat den Vorteil, dass im Bereich der Auswurföffnung kein zu schneidendes Gut geschnitten wird. Vielmehr wird das Gut in Rotationsrichtung 25 des Messers erst hinter der Auswurföffnung geschnitten, so dass es gezwungen wird, wenigstens einmal das Messergehäuse zu durchlaufen, wodurch eine weitere Zerkleinerung eintritt.

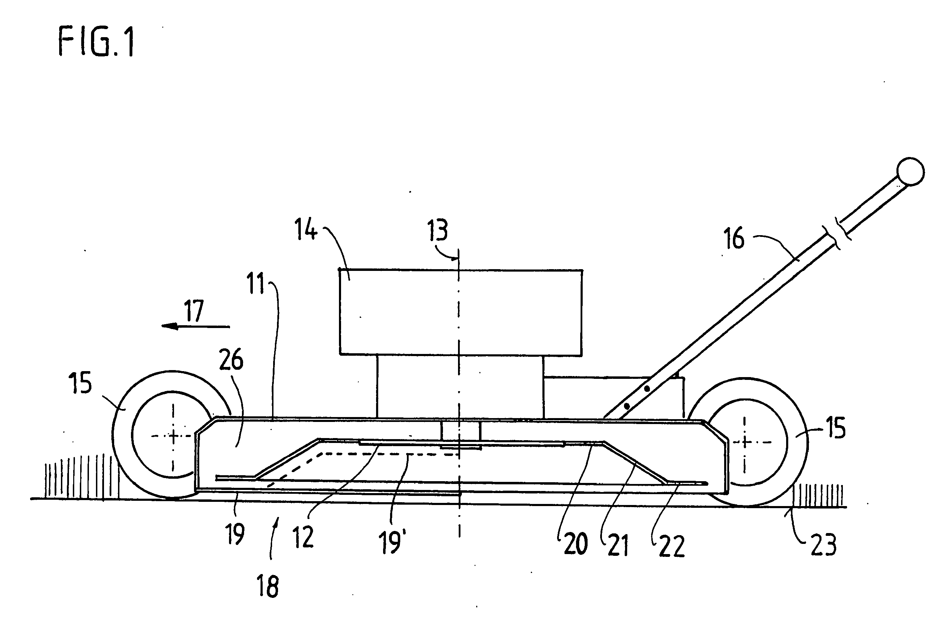

Es ist zudem günstig, wenn die Bodenplatte 19 im Bereich des Einlaufs des Messers in den durch die Bodenplatte überdeckten Bereich zumindest eine radial außen liegende Aussparung 27 aufweist und das Messergehäuse dort nach unten offen ist. Dadurch wird erreicht, dass sich die Halme dort besser und schneller aufrichten können und sicher erfasst werden. Bei der gezeigten Ausführungsform des Mähers ist die Bodenplatte unterhalb des Messergehäuses eben und parallel zum Boden ausgebildet. Es ist auch möglich, dass die Bodenplatte 19' zumindest teilweise dem Verlauf des Messers angepasst ist und beispielsweise in einem zumindest abschnittsweise gleichem Abstand zu den Schneidkanten oder -bereichen verläuft. Diese Ausbildung der Bodenplatte ist in Fig. 1 gestrichelt gezeigt.

Die vorstehende Beschreibung bezieht sich auf einen Mäher, der im Betrieb auf einem im wesentlichen horizontalen Boden bewegt wird. Beim Betrieb auf einem schrägen oder unebenen Boden sind die gewählten Bezugsbegriffe horizontal und vertikal entsprechend zu verstehen und anzupassen.

Mit einer derartigen Ausbildung eines Mähers kann eine sehr gute Zerkleinerung des Schnittgutes bewirkt werden. Insbesondere wird das zu schneidende Gut mehrfach geschnitten, wodurch sich unmittelbar die gewünschte Zerkleinerung einstellt. Auch wird das Gut aufgrund der Überdeckung der Auswurfeinrichtung wenigstens einmal durch den durch die Bodenplatte 19 und das Messergehäuse 11 gebildeten Raum 26 transportiert, wodurch es mehrfach in Kontakt mit dem Messer kommt. Eine weitere Zerkleinerung des Schnittgutes wird sich einstellen. Es können auch zusätzliche Einbauten vorgesehen sein, die das Schnittgut wieder in Richtung auf das Messer 12 leiten. Eine optimale Zerkleinerung des Schnittgutes zur Verwendung als Mulch wird hierdurch erreicht.

## Patentansprüche

1. Mäher mit einem Messergehäuse (11), in dem ein Messer (12) um eine aufrechte Rotationsachse (13) in einer Drehebene rotiert, die in der Betriebslage im wesentlichen parallel zum Boden verläuft, so dass bei einer Bewegung des Mähers in Mährichtung (17) das Schnittgut entsprechend dem Durchmesser des Messers geschnitten wird, **dadurch gekennzeichnet, dass** der in Mährichtung (17) vordere Bereich (18) des Messergehäuses zumindest teilweise durch eine Bodenplatte (19) abgedeckt ist, die zwischen Messer und Boden verläuft und sich von vorne bis etwa zur Mitte des Messergehäuses erstreckt, und dass das Messer in radialer Richtung wenigstens zwei Schneidkanten oder Schneidkantenbereiche (20, 21, 22) mit unterschiedlichen schnitthöhen aufweist.

2. Mäher nach Anspruch 1, **dadurch gekennzeichnet, dass** die Schnitthöhe der Schneidkanten oder Schneidkantenbereiche (20, 21, 22) von radial innen nach außen zumindest abschnittsweise stufenweise abnimmt.

3. Mäher nach einem der Ansprüche 1 oder 2, **dadurch gekennzeichnet, dass** wenigstens eine Schneidkante oder ein Schneidkantenbereich (21) des Messers (12) in radialer Richtung schräg nach unten und außen verlaufen.

4. Mäher nach Anspruch 3, **dadurch gekennzeichnet, dass** in der Betriebslage die Schneidkante oder der Schneidkantenbereich in einem Winkel zwischen 15° und 45° geneigt zum Boden verläuft.

5. Mäher nach einem der Ansprüche 1 bis 4, **dadurch gekennzeichnet, dass** das Messer zumindest abschnittsweise einen in radialer Richtung stufenweise ausgebildeten Verlauf aufweist derart, dass in Bezug auf die Rotationsachse innere Schneidkanten oder Schneidkantenbereiche (20) mit höherer und äußere Schneidkanten oder Schneidkantenbereiche (22) mit niedrigerer Schnitthöhe vorhanden sind.

6. Mäher nach einem der Ansprüche 1 bis 5, **dadurch gekennzeichnet, dass** ein radial innerer Abschnitt des Messers keine Schneidkante aufweist und als Scheibe ausgebildet ist.

7. Mäher nach einem der Ansprüche 1 bis 7, **dadurch gekennzeichnet, dass** das Messer als nach unten offene Glocke (28) mit einem radial äußeren Rand (29) ausgebildet ist, der nach unten und außen geneigt verläuft, und dass die Schneidkanten oder Schneidkantenbereiche durch nach innen gebogene Einschnitte (30) des Rands gebildet werden.

8. Mäher nach Anspruch 7, **dadurch gekennzeichnet, dass** wenigstens zwei und vorzugsweise vier bis zehn symmetrisch zur Rotationsachse angeordnete Schneidkanten oder Schneidkantenbereiche vorgesehen sind.

9. Mäher nach einem der Ansprüche 7 oder 8, **dadurch gekennzeichnet, dass** der Rand (29) in der Betriebslage in einem Winkel zwischen 45° und nahezu 90° geneigt zum Boden verläuft.

10. Mäher nach einem der Ansprüche 1 bis 9, **dadurch gekennzeichnet, dass** zumindest die radial äußerste Schneidkante oder der Schneidkantenbereich (22) in der Betriebslage im wesentlichen parallel zum Boden ausgerichtet sind.

11. Mäher nach einem der Ansprüche 1 bis 10, **dadurch gekennzeichnet, dass** die Bodenplatte (19) im wesentlichen eben und parallel zur Drehebene des Messers verläuft.

12. Mäher nach einem der Ansprüche 1 bis 5, **dadurch gekennzeichnet, dass** die Bodenplatte (19') an den radialen Verlauf des Messers angepasst ist.

13. Mäher nach einem der Ansprüche 1 bis 12, **dadurch gekennzeichnet, dass** die Bodenplatte die Rotationsachse überdeckt und die Rotationsachse an der Bodenplatte gelagert ist.

14. Mäher nach einem der Ansprüche 1 bis 13, **dadurch gekennzeichnet, dass** die Bodenplatte im Bereich des Einlaufs des Messers in den durch die Bodenplatte überdeckten Bereich zumindest eine radial außen liegende Aussparung aufweist.

15. Mäher nach einem der Ansprüche 1 bis 14, **dadurch gekennzeichnet, dass** das Messergehäuse eine seitliche Auswurföffnung (24) für das Schnittgut aufweist und dass die Bodenplatte (19) in Rotationsrichtung (25) die Auswurföffnung in der Projektion zumindest teilweise überdeckt oder sich über diese hinaus erstreckt.

16. Mäher nach einem der Ansprüche 1 bis 15, **dadurch gekennzeichnet, dass** das Messergehäuse in Fahrtrichtung hinten offen ausgebildet ist.

## Claims

1. Mower comprising a blade housing (11) in which a blade (12) rotates about a vertical rotation axis (13) in a rotation plane which, in the operating position, runs essentially parallel to the ground so that, during a movement of the mower in the mowing direction (17), the cut material is cut according to the diameter of the blade, **characterised in that** the front region (18) of the blade housing, as seen in the mowing direction (17), is at least partially covered by a base plate (19) which runs between the blade and the ground and extends from the front to approximately the centre of the blade housing, and **in that** the blade has in the radial direction at least two cutting edges or cutting edge regions (20, 21, 22) with different cutting heights.

2. Mower according to Claim 1, **characterised in that** the cutting height of the cutting edges or cutting edge regions (20, 21, 22) decreases in steps radially from inside to outside at least in sections.

3. Mower according to one of Claims 1 or 2, **characterised in that** at least one cutting edge or cutting edge region (21) of the blade (12) runs diagonally downwards and outwards in the radial direction.

4. Mower according to Claim 3, **characterised in that**, in the operating position, the cutting edge or cutting edge region is inclined at an angle of between 15° and 45° to the ground.

5. Mower according to one of Claims 1 to 4, **characterised in that** the blade has a stepped profile in the radial direction at least in sections, such that, with respect to the rotation axis, there are inner cutting edges or cutting edge regions (20) with a higher cutting height and outer cutting edges or cutting edge regions (22) with a lower cutting height.

6. Mower according to one of Claims 1 to 5, **characterised in that** a radially inner section of the blade has no cutting edge and is designed as a disc.

7. Mower according to one of Claims 1 to 7, **characterised in that** the blade is designed as a bell (28) that is open at the bottom, with a radially outer edge (29) which is inclined downwards and outwards, and **in that** the cutting edges or cutting edge regions are formed by inwardly bent notches (30) of the edge.

8. Mower according to Claim 7, **characterised in that** at least two and preferably four to ten cutting edges or cutting edge regions are provided, arranged symmetrically with respect to the rotation axis.

9. Mower according to one of Claims 7 or 8, **characterised in that**, in the operating position, the edge (29) is inclined at an angle of between 45° and almost 90° to the ground.

10. Mower according to one of Claims 1 to 9, **characterised in that** at least the radially outermost cutting edge or cutting edge region (22) is oriented essentially parallel to the ground in the operating position.

11. Mower according to one of Claims 1 to 10, **characterised in that** the base plate (19) is essentially flat and runs parallel to the rotation plane of the blade.

12. Mower according to one of Claims 1 to 5, **characterised in that** the base plate (19') is adapted to the radial profile of the blade.

13. Mower according to one of Claims 1 to 12, **characterised in that** the base plate overlaps the rotation axis and the rotation axle is mounted on the base plate.

14. Mower according to one of Claims 1 to 13, **characterised in that** the base plate has at least one radially outer cutout in the region of the inlet of the blade in the region overlapped by the base plate.

15. Mower according to one of Claims 1 to 14, **characterised in that** the blade housing has a lateral discharge opening (24) for the cut material, and **in that** the base plate (19), in the rotation direction (25), at least partially overlaps the discharge opening in projection or extends over said discharge opening.

16. Mower according to one of Claims 1 to 15, **characterised in that** the blade housing is designed to be open at the rear in the direction of travel.

## Revendications

1. Tondeuse avec un boîtier (11), dans lequel est monté un couteau (12) tournant autour d'un axe de rotation (13), dans un plan essentiellement parallèle au sol, de sorte qu'en déplaçant la tondeuse dans la direction de tonte (17) la coupe du produit s'effectue en correspondance avec le diamètre du couteau,
**caractérisée en ce que**
la zone (18) située, par rapport au sens de tonte (17), devant le boîtier de couteau (11), est recouverte au moins en partie par une plaque de sol (19) qui s'étend entre le couteau et le sol, de l'avant jusqu'au milieu environ du boîtier (11), le couteau présentant en direction radiale au moins deux arêtes ou deux zones d'arête de coupe (20, 21, 22) correspondant à des hauteurs de coupe différentes.

2. Tondeuse selon la revendication 1,
**caractérisée en ce que**
la hauteur de coupe des arêtes ou des zones d'arête de coupe (20, 21, 22) diminue de l'intérieur vers l'extérieur, au moins localement par paliers.

3. Tondeuse selon la revendication 1 ou 2,
**caractérisée en ce qu'**
au moins une arête ou une zone d'arête de coupe (21) du couteau (12) est inclinée radialement vers le bas et vers l'extérieur.

4. Tondeuse selon la revendication 3,
**caractérisée en ce qu'**
en position de service, l'arête de coupe ou la zone d'arête de coupe est inclinée de 15° à 45° par rapport au sol.

5. Tondeuse selon une des revendications 1 à 4,
**caractérisée en ce que**
le couteau présente au moins localement un tracé en gradins dans la direction radiale, de sorte que par rapport à l'axe de rotation il existe des arêtes de coupe ou des zones d'arête de coupe (20) internes présentant une hauteur de coupe plus grande et des arêtes de coupe ou des zones d'arête de coupe (22) externes présentant une hauteur de coupe plus faible.

6. Tondeuse selon une des revendications 1 à 5,
**caractérisée en ce qu'**
une partie de couteau, située radialement vers l'intérieur, ne présente aucune arête et a la forme d'un disque.

7. Tondeuse selon une des revendications 1 à 6,
**caractérisée en ce que**
le couteau a la forme d'une cloche (28) avec un bord (29) radialement externe qui est incliné vers le bas et vers l'extérieur, et les arêtes de coupe ou les zones d'arête de coupe sont constituées par des encoches (30) du bord, recourbées vers l'intérieur.

8. Tondeuse selon la revendication 7,
**caractérisée en ce qu'**
il est prévu au moins deux et de préférence quatre à dix arêtes de coupe ou zones d'arête de coupe, symétriques par rapport à l'axe de rotation.

9. Tondeuse selon la revendication 7 ou 8,
**caractérisée en ce que**
le bord (29), en position de service, est incliné selon un angle compris entre 45° et 90° environ, par rapport au sol.

10. Tondeuse selon une des revendications 1 à 9,
**caractérisée en ce qu'**
au moins l'arête ou la zone d'arête (22) radialement extérieure est, en position de service, essentiellement parallèle au sol.

11. Tondeuse selon une des revendications 1 à 10,
**caractérisée en ce que**
la plaque de sol (19) est essentiellement plane et parallèle au plan de rotation du couteau.

12. Tondeuse selon une des revendications 1 à 5,
**caractérisée en ce que**
la plaque de sol (19') est ajustée au tracé radial du couteau.

13. Tondeuse selon une des revendications 1 à 12,
**caractérisée en ce que**
la plaque de fond recouvre l'axe de rotation et cet axe est monté sur la plaque.

14. Tondeuse selon une des revendications 1 à 13,
**caractérisée en ce que**
la plaque de sol, dans la zone de pénétration du couteau, présente au moins un évidement radialement extérieur dans la zone recouverte par la plaque de sol.

15. Tondeuse selon une des revendications 1 à 14,
**caractérisée en ce que**
le boîtier de couteau présente une ouverture d'éjection (24) pour le produit de la coupe et la plaque de sol (19) dans le sens de rotation (25) recouvre en projection au moins partiellement l'ouverture d'éjection ou s'étend sur celle-ci.

16. Tondeuse selon une des revendications 1 à 15,
**caractérisée en ce que**
le boîtier de couteau est ouvert vers l'arrière par rapport au sens de déplacement de la tondeuse.
